# EUROPÄISCHE PATENTSCHRIFT

(11) **EP 4 310 465 B1**
(45) Veröffentlichungstag und Bekanntmachung des Hinweises auf die Patenterteilung: **14.05.2025**
(21) Anmeldenummer: 23185221.1
(22) Anmeldetag: 13.07.2023
(51) Int. Cl.: G01G 19/12, B60G 11/22, B60B 35/04, B60B 35/08, B60G 17/019, B60B 35/16

(54) **VORRICHTUNG UND VERFAHREN ZUR MESSUNG DES GEWICHTS EINES ANHÄNGERS**
DEVICE AND METHOD FOR MEASURING THE WEIGHT OF A TRAILER
DISPOSITIF ET METHODE DE MESURE DU POIDS D'UNE REMORQUE

(30) Priorität: 20.07.2022 DE 102022118187
(43) Veröffentlichungstag der Anmeldung: 24.01.2024
(73) Patentinhaber: feinarbyte GmbH, 91054 Erlangen (DE)
(72) Erfinder: Gräf, Florian, 91052 Erlangen (DE); Zipperle, Timo, 91091 Großenseebach (DE)
(74) Vertreter: Meyer, Rudolf

(56) Entgegenhaltungen:
- US-A- 3 521 484
- US-B1- 6 588 778

## Beschreibung

Die Erfindung betrifft ein Verfahren zur Messung des Gewichts eines Fahrzeuganhängers, insbesondere eines einachsigen Anhängers. Ferner betrifft die Erfindung eine zur Durchführung eines solchen Messverfahrens geeignete Vorrichtung.

Eine in der US 3,521,484 A offenbarte Vorrichtung, welche zur Messung einer Achslast vorgesehen ist, umfasst zwei parallel zueinander angeordnete Federscheiben und eine Anordnung aus Dehnungsmessstreifen. Die Vorrichtung nach der US 3,521,484 A soll insbesondere in der Lage sein, Scherkräfte zu erfassen.

Eine in der US 6,588,778 B1 beschriebene Achse eines einachsigen Anhängers weist eine Torsionsfederung auf. Hierbei ist ein stabförmiges inneres Achsteil in einen hohlen Achskörper eingesteckt, wobei zwischen dem inneren Achsteil und der Innenwandung des hohlen Achskörpers im Wesentlichen zylindrische Stäbe aus einem elastischen Material platziert sind. An das innere Achsteil schließt ein Schwinghebel an, an dessen Ende sich ein Radlager befindet.

Die DE 199 18 679 A1 offenbart ein System zur Ermittlung der Fahrzeugmasse und deren Verteilung sowie zur Aufbereitung und Verarbeitung dieser Information. Das System nach der DE 199 18 679 A1 soll insbesondere bei Nutzfahrzeugen, Wohnmobilen und Gespannen verwendbar sein.

Die DE 10 2020 131 863 A1 beschreibt eine Sensoraufhängungsanordnung für Fahrzeuge, die eine Radnabeneinheit und einen Aufhängungsträger oder -achsschenkel aufweist.

Der Erfindung liegt die Aufgabe zugrunde, Achslastmessungen bei Fahrzeugen, insbesondere Anhängern, gegenüber dem Stand der Technik hinsichtlich eines robusten, fertigungsfreundlichen Aufbaus bei zugleich gegen Störungseinflüsse unempfindlicher, ausreichend genaue Bereitstellung von Messwerten weiterzuentwickeln.

Diese Aufgabe wird erfindungsgemäß gelöst durch eine Vorrichtung zur Messung des Gewichts eines Anhängers mit den Merkmalen des Anspruchs 1. Ebenso wird die Aufgabe gelöst durch ein Verfahren zur Messung des Gewichts eines Anhängers gemäß Anspruch 6. Im Folgenden im Zusammenhang mit dem Messverfahren erläuterte Ausgestaltungen und Vorteile der Erfindung gelten sinngemäß auch für die Vorrichtung, das heißt die Messvorrichtung, und umgekehrt.

Die Messvorrichtung umfasst ein in einem hohlen Achskörper gelagertes Hebelbauteil, welches aus einem in den Achskörper eingesteckten stabförmigen inneren Achsteil und einem hieran anschließenden Schwinghebel, welcher zur Halterung eines Radlagers vorgesehen ist, aufgebaut ist, wobei eine Federung durch zwischen das innere Achsteil und den hohlen Achskörper eingesetzte Federelemente gebildet ist. Es existiert eine Achslastmessvorrichtung, welche einen länglichen, in das innere Achsteil eingeschobenen Messkörper umfasst, dessen erstes Ende starr mit dem an den Schwinghebel angeschlossenen Ende des inneren Achsteils verbunden ist und dessen zweites Ende in einem weiter vom Schwinghebel entfernten Abschnitt des inneren Achsteils starr mit diesem verbunden ist, wobei sich eine Messstelle des Messkörpers zwischen dessen beiden Enden befindet.

Vorteilhafte Ausgestaltungen sind Gegenstand der abhängigen Ansprüche.

Beispielsweise ist der Messkörper im Bereich seiner beiden Enden jeweils rohrförmig und in einem Zwischenbereich, in welchem sich die Messstelle befindet, rinnenförmig ausgebildet. Die Enden des Messkörpers können durch Klemmung im inneren Achsteil oder in einem beispielsweise hülsenförmigen Zwischenelement, welches beim Betrieb der Messvorrichtung auftretende Kräfte und Momente überträgt, fixiert sein.

Die Vorrichtung zur Messung des Gewichts eines Anhängers - präziser: zur Achslastmessung - ist raumsparend in bei üblichen Achskonstruktionen ohnehin vorhandene Fahrwerkskomponenten einbaubar. Zugleich hat sich gezeigt, dass die Messvorrichtung gegen störende Einflüsse, etwa Seitenkräfte, in einem hohen Maße unempfindlich ist.

Überraschenderweise werden Messergebnisse hoher Qualität erzielt, obwohl der Messkörper einschließlich Sensor in ein Element, nämlich das Hebelbauteil, eingebaut ist, welches sich beim Federn nicht oder kaum verformt. Der maximale Federweg der Federung ist zu mindestens 95% durch die Federelemente und zu weniger als 5% durch Verformung des Hebelbauteils gegeben.

Bei dem Sensor kann es sich um ein gesondertes Element handeln, welches auf dem Messkörper befestigt ist und insbesondere einen Dehnungsmessstreifen umfasst. Alternativ kann der Messkörper unmittelbar mit einer dehnungssensitiven Beschichtung versehen sein.

Das anmeldungsgemäße Messverfahren geht allgemein von einem Anhänger aus, welcher einen starr mit einem Chassis des Anhängers verbundenen Achskörper, ein gegenüber dem Achskörper verschwenkbares, ein Radlager tragendes Hebelbauteil, sowie mindestens ein das Hebelbauteil gegenüber dem Achskörper federnd abstützendes Federelement aufweist. Eine Einfederung des Hebelbauteils wird mittels eines Sensors gemessen, der sich in einem mit dem Achskörper überlappenden Bereich des Hebelbauteils befindet. Insbesondere befindet sich der Sensor hierbei in einem durch den Achskörper gebildeten Hohlraum.

Nachfolgend werden mehrere Ausführungsbeispiele der Erfindung anhand einer Zeichnung näher erläutert. Hierin zeigen, teilweise grob vereinfacht oder symbolisiert:
- Fig. 1: eine Vorrichtung zur Messung der Achslast eines Anhängers in geschnittener Darstellung,
- Fig. 2: Komponenten einer Vorrichtung zur Achslastmessung in einer weiteren Darstellung,
- Fig. 3: Zusammenhänge zwischen verschiedenen in den Anordnungen nach den Fig. 1 und 2 enthaltenen Komponenten, welche unterschiedliche Elastizitäten aufweisen, in der Art eines "Ersatzschaltbildes".

Die folgenden Erläuterungen beziehen sich, soweit nicht anders angegeben, auf sämtliche Ausführungsbeispiele. Einander entsprechende oder prinzipiell gleichwirkende Teile sind in allen Figuren mit den gleichen Bezugszeichen gekennzeichnet.

Eine insgesamt mit dem Bezugszeichen 1 gekennzeichnete Vorrichtung zur Messung des Gewichts eines Anhängers ist zur Verwendung in einem einachsigen Anhänger, beispielsweise Wohnwagen, vorgesehen. Achskonstruktionen von Anhängern sind prinzipiell zum Beispiel aus der DE 20 2011 103 222 U1 bekannt.

Die Messvorrichtung 1 umfasst ein in einem hohlen Achskörper 2 gelagertes Hebelbauteil 3, welches auch als Schwinghebelanordnung bezeichnet wird. In den Achskörper 2 ist ein inneres Achsteil 4 eingesteckt, welches dem Hebelbauteil 3 zuzurechnen ist. Außerhalb des Achskörpers 2 schließt an das innere Achsteil 4 ein Schwinghebel 5 an, welcher im Wesentlichen in Fahrzeuglängsrichtung ausgerichtet ist und ebenfalls einen integralen Bestandteil des Hebelbauteils 3 darstellt. Ein am Ende des Schwinghebels 5 angeordnetes Radlager ist mit 6 bezeichnet.

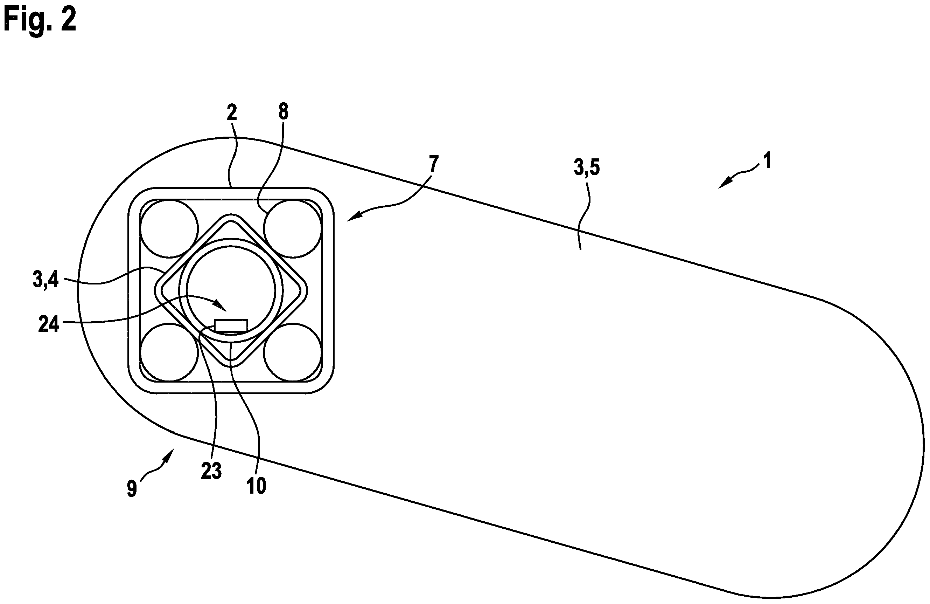

Eine insgesamt mit 7 bezeichnete Federung des Anhängers ist mit Hilfe von Federelementen 8 realisiert, welche zwischen das innere Achsteil 4 und den hohlen Achskörper 2 eingesetzt sind. In Querschnitt hat der hohle Achskörper 2 ebenso wie das innere Achsteil 4 eine quadratische Grundform, wobei die genannten Elemente 2, 4, wie aus Fig. 2 hervorgeht, im mechanisch nicht belasteten Zustand um 45° gegeneinander verdreht sind. Bei den Federelementen 8 handelt es sich um langgestreckte Gummielemente, welche sich in den Ecken des hohlen Achskörpers 2 befinden.

Eine Achslastmessvorrichtung 9 umfasst einen länglichen Messkörper 10, welche in das innere Achsteil 4 eingeschoben ist. Je nach Achskonstruktion und Aufbau des gesamten Anhängers, bei welchem es sich auch um einen mehrachsigen Anhänger handeln kann, umfasst die gesamte Messvorrichtung 1 eine Anzahl typischerweise gleich aufgebauter Achslastmessvorrichtungen 9. Dies gilt analog auch für Fälle, in denen ein Kraftfahrzeug, beispielsweise ein PKW oder LKW, mit der Messvorrichtung 1 ausgerüstet ist.

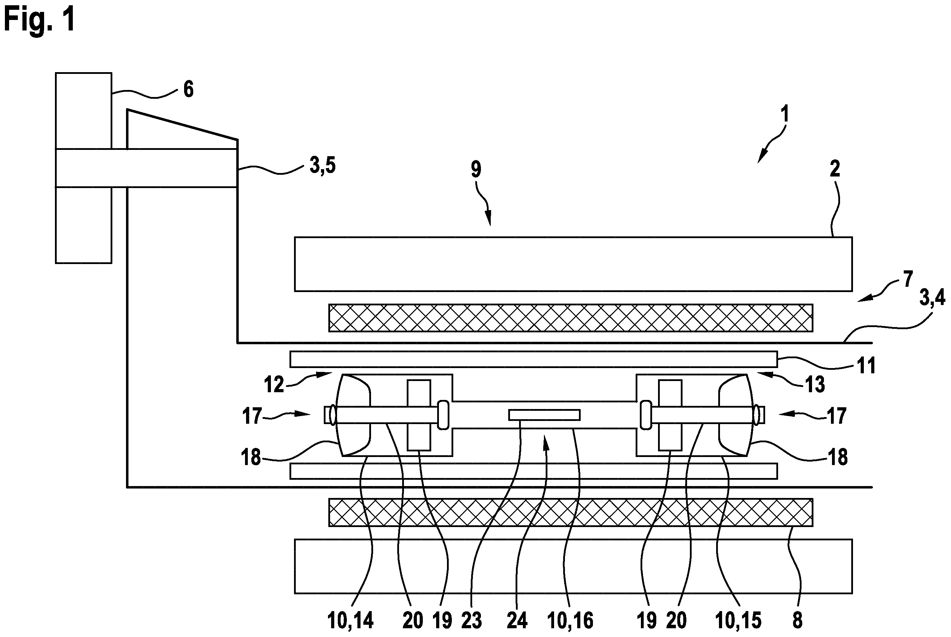

Eine optionale Zwischenhülse 11, welche ausschließlich in Fig. 1 eingezeichnet ist, füllt gegebenenfalls einen Ringraum zwischen dem Messkörper 10 und der Innenwandung des inneren Achsteils 4 aus. Abstände zwischen konzentrisch zueinander angeordneten Komponenten der Achslastmessvorrichtung 9 sind in Fig. 1 lediglich der Übersichtlichkeit halber eingezeichnet.

Der Messkörper 10 weist ein erstes, äußeres Ende 12 und ein zweites, inneres Ende 13 auf. Das erste Ende 12 befindet sich nahe am Schwinghebel 5; das zweite Ende 13 ist vergleichsweise weit vom Schwinghebel 5 beabstandet. Der Messkörper 10 ist insgesamt annähernd rohrförmig gestaltet, wobei die Rohrform ausschließlich in äußeren Abschnitten 14, 15 des Messkörpers 10 gegeben sind. Die äußeren Abschnitte 14, 15 sind durch einen mittleren, rinnenförmigen Abschnitt 16 miteinander verbunden. Zur Fixierung der Abschnitte 14, 15 im inneren Achsteil 4 sind Klemmvorrichtungen 17 vorgesehen. Jede Klemmvorrichtung 17 umfasst zwei Klemmelemente 18, 19 die mit Hilfe einer Schraube 20 derart gegeneinander verspannbar sind, dass sich der betreffende Abschnitt 14, 15 aufweitet und gegen die Zwischenhülse 11 beziehungsweise unmittelbar gegen die Innenwandung des inneren Achsteils 4 gepresst wird. Um das Aufweiten der äußeren Abschnitte 14, 15 zu ermöglichen, können diese Abschnitte 14, 15 in nicht dargestellter Weise geschlitzt sein. In dem entsprechenden Schlitz, der eine gerade oder gewundene Form aufweisen kann, kann ein Kabel 21 der Messvorrichtung 9 verlegt sein.

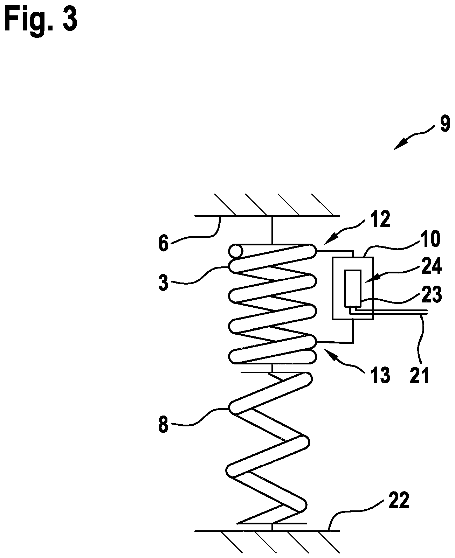

Die symbolische Darstellung nach Fig. 3 bezieht sich sowohl auf die Anordnung nach Fig. 1 als auch auf die Anordnung nach Fig. 2 und soll federnde Eigenschaften verschiedener Bestandteile der Achslastmessvorrichtung 9 visualisieren. Die mehr oder weniger federnd ausgebildeten Komponenten sind zwischen das Radlager 6 und das mit 22 bezeichnete Chassis des Anhängers, im vorliegenden Fall Einachsanhängers, geschaltet. Der Haupteffekt der Federung 7 wird durch die Federelemente 8 realisiert, welche in Fig. 3 in Form einer - in der Realität nicht gegebenen - Schraubenfeder angedeutet sind. Der maximale Federweg der Federung 7 ist nahezu ausschließlich durch die Nachgiebigkeit der Federelemente 8 vorgegeben. Das Hebelbauteil 3 dagegen, in Fig. 3 ebenfalls durch eine Schraubenfeder symbolisiert, weist eine vergleichsweise sehr hohe Härte auf, so dass mit guter Näherung von einem in sich starren Körper gesprochen werden kann. Mit der Achslastmessvorrichtung 9 werden Verformungen an diesem nahezu starren Körper, das heißt Hebelbauteil 3 - genauer: inneren Achsteil 4 - aufgenommen. Es hat sich gezeigt, dass damit eine für den vorliegenden Zweck ausreichende Messgenauigkeit erzielbar ist.

Die Achslastmessvorrichtung 9 umfasst einen dehnungssensitiven Sensor 23, welcher sich an einer Messstelle 24 befindet. Die Messstelle 24 liegt auf der Innenseite des rillenförmigen mittleren Abschnitts 16. Vom Sensor 23 gelieferte Daten können drahtgebunden und oder drahtlos an eine nicht dargestellte Auswerteeinheit übertragen werden.

### Bezugszeichenliste

- 1: Messvorrichtung zur Gewichtsmessung
- 2: Achskörper
- 3: Hebelbauteil
- 4: inneres Achsteil
- 5: Schwinghebel
- 6: Radlager
- 7: Federung
- 8: Federelement
- 9: Achslastmessvorichtung
- 10: Messkörper
- 11: Zwischenhülse
- 12: erstes, äußeres Ende des Messkörpers
- 13: zweites, inneres Ende des Messkörpers
- 14: äußerer Abschnitt
- 15: äußerer Abschnitt
- 16: mittlerer Abschnitt
- 17: Klemmvorrichtung
- 18: Klemmelement
- 19: Klemmelement
- 20: Schraube
- 21: Kabel
- 22: Chassis
- 23: Sensor
- 24: Messstelle

## Patentansprüche

1. Vorrichtung zur Messung des Gewichts eines Anhängers, umfassend ein in einem hohlen Achskörper (2) gelagertes Hebelbauteil (3), welches aus einem in den Achskörper (2) eingesteckten stabförmigen inneren Achsteil (4) und einem hieran anschließenden Schwinghebel (5), welcher zur Halterung eines Radlagers (6) vorgesehen ist, aufgebaut ist, wobei eine Federung (7) durch zwischen das innere Achsteil (4) und den hohlen Achskörper (2) eingesetzte Federelemente (8) gebildet ist, weiter umfassend eine Achslastmessvorrichtung (9), welche einen länglichen, in das innere Achsteil (4) eingeschobenen Messkörper (10) umfasst, dessen erstes Ende (12) starr mit dem an den Schwinghebel (5) angeschlossenen Ende des inneren Achsteils (4) und dessen zweites Ende (13) in einem weiter vom Schwinghebel (5) entfernten Abschnitt des inneren Achsteils (4) starr mit diesem verbunden ist, wobei sich eine Messstelle (24) des Messkörpers (10) zwischen dessen beiden Enden (12, 13) befindet, und wobei das Hebelbauteil (3) einschließlich des inneren Achsteils (4) im Vergleich zu den Federelementen (8) eine vergleichsweise sehr hohe Härte aufweist, so dass der maximale Federweg der Federung (7) zu mindestens 95% durch die Federelemente (8) und zu weniger als 5% durch Verformung des Hebelbauteils (3) gegeben ist.

2. Vorrichtung nach Anspruch 1, **dadurch gekennzeichnet, dass** der Messkörper (10) im Bereich seiner Enden (12, 13) rohrförmig und in einem mittleren Abschnitt (16), in welchem sich die Messstelle (24) befindet, rinnenförmig ausgebildet ist.

3. Vorrichtung nach Anspruch 1 oder 2, **dadurch gekennzeichnet, dass** die Enden (12, 13) des Messkörpers (10) durch Klemmung im inneren Achsteil (4) fixiert sind.

4. Vorrichtung nach einem der Ansprüche 1 bis 3, **gekennzeichnet durch** einen dehnungssensitiven Sensor (23) an der Messstelle (24).

5. Vorrichtung nach einem der Ansprüche 1 bis 4, **dadurch gekennzeichnet, dass** als Federelemente (8) stabförmige Gummielemente vorgesehen sind.

6. Verfahren zur Messung des Gewichts eines Anhängers, welcher einen starr mit einem Chassis (22) des Anhängers verbundenen Achskörper (2), ein gegenüber dem Achskörper (2) verschwenkbares, ein Radlager (6) tragendes Hebelbauteil (3), sowie mindestens ein das Hebelbauteil (3) gegenüber dem Achskörper (2) federnd abstützendes, einer Federung (7) zuzurechnendes Federelement (8) aufweist, wobei eine Einfederung des Hebelbauteils (3) durch einen Sensor (23), welcher sich in einem mit dem Achskörper (2) überlappenden Bereich des Hebelbauteils (3) befindet, gemessen wird, wobei das Hebelbauteil (3) einschließlich eines inneren Achsteils (4) im Vergleich zu den Federelementen (8) eine vergleichsweise sehr hohe Härte aufweist, so dass der maximale Federweg der Federung (7) zu mindestens 95% durch die Federelemente (8) und zu weniger als 5% durch Verformung des Hebelbauteils (3) gegeben ist.

7. Verfahren nach Anspruch 6, **dadurch gekennzeichnet, dass** die Einfederung in einem durch den Achskörper (2) gebildeten Hohlraum gemessen wird.

## Claims

1. Apparatus for measuring the weight of a trailer, comprising a lever component (3) mounted in a hollow axle beam (2), which is constructed of a rod-shaped inner axle part (4) inserted into the axle beam (2) and a rocker arm (5) connected thereto, which is intended for holding a wheel bearing (6), wherein a suspension (7) is formed by spring elements (8) inserted between the inner axle part (4) and the hollow axle beam (2), further comprising an axle load measuring device (9), which comprises an elongated measuring body (10) inserted into the inner axle part (4), the first end of which (12) is rigidly connected to the end of the inner axle part (4) connected to the rocker arm (5) and the second end (13) of which is rigidly connected to the rocker arm (5) in a portion of the inner axle part (4) further away from the rocker arm (5), wherein a measuring point (24) of the measuring body (10) is located between its two ends (12, 13), and wherein the lever component (3) including the inner axle part (4) has a comparatively very high hardness compared to the spring elements (8), so that the maximum spring travel of the suspension (7) is given at least 95% by the spring elements (8) and less than 5% by deformation of the lever component (3).

2. The apparatus according to claim 1, **characterized in that** the measuring body (10) is tubular in the region of its ends (12, 13) and trough in a middle section (16) in which the measuring point (24) is located.

3. The apparatus according to claim 1 or 2 , **characterized in that** the ends (12, 13) of the measuring body (10) are fixed by clamping in the inner axle part (4).

4. A device according to any one of claims 1 to 3, **characterized by** a strain-sensitive sensor (23) at the measuring point (24).

5. A device according to any one of claims 1 to 4, **characterized in that** rod-shaped rubber elements are provided as spring elements (8).

6. A method for measuring the weight of a trailer which has an axle beam (2) rigidly connected to a chassis (22) of the trailer, a lever component (3) which can be swivelled with respect to the axle beam (2) and carries a wheel bearing (6), and at least one spring member (8) which provides spring-loaded support for the lever component (3) with respect to the axle beam (2) and is attributable to a suspension (7), wherein a deflection of the lever component (3) by a sensor (23), which is located in an area of the lever component (3) overlapping with the axle beam (2), wherein the lever component (3) including an inner axle part (4) has a comparatively very high hardness compared to the spring elements (8), so that the maximum spring travel of the suspension (7) is given at least 95% by the spring elements (8) and less than 5% by deformation of the lever component (3).

7. The method of claim 6, **characterized in that** the deflection is measured in a cavity formed by the axle beam (2).

## Revendications

1. Dispositif de mesure du poids d'une remorque, comprenant un composant de levier (3) monté dans un corps d'essieu creuse (2), qui est constitué d'une partie d'essieu intérieur en forme de tige (4) insérée dans le corps d'essieu (2) et d'un culbuteur (5) relié à celle-ci, qui est destiné à maintenir un roulement de roue (6), dans lequel une suspension (7) est formée par des éléments de ressort (8) insérés entre la partie d'essieu intérieur (4) et le corps d'essieu creuse (2), comprenant en outre un dispositif de mesure de la charge par essieu (9), qui comprend un corps de mesure allongé (10) inséré dans la partie d'essieu intérieur (4), dont la première extrémité (12) est reliée de manière rigide à l'extrémité de la partie d'essieu intérieur (4) reliée au culbuteur (5) et dont la seconde extrémité (13) est reliée de manière rigide au culbuteur (5) dans une partie de la partie intérieure de l'essieu (4) plus éloignée du culbuteur (5), dans lequel un point de mesure (24) du corps de mesure (10) est situé entre ses deux extrémités (12, 13), et dans lequel l'élément de levier (3), y compris la partie d'essieu intérieur (4), a une dureté comparativement très élevée par rapport aux éléments de ressort (8), de sorte que la course maximale du ressort de la suspension (7) est donnée d'au moins 95 % par les éléments de ressort (8) et de moins de 5 % par la déformation du composant de levier (3).

2. Dispositif selon la revendication 1, **caractérisé en ce que** le corps de mesure (10) est réalisé en forme de tube dans la zone de ses extrémités (12, 13) et en forme de gouttière dans une section centrale (16), dans laquelle se trouve le point de mesure (24).

3. Dispositif selon la revendication 1 ou 2, **caractérisé en ce que** les extrémités (12, 13) du corps de mesure (10) sont fixées par serrage dans la partie d'essieu intérieure (4).

4. Dispositif selon l'une quelconque des revendications 1 à 3, **caractérisé par** un capteur sensible à la déformation (23) au point de mesure (24).

5. Dispositif selon l'une quelconque des revendications 1 à 4, **caractérisé en ce que** des éléments en caoutchouc en forme de tige sont prévus comme éléments à ressort (8).

6. Méthode de mesure du poids d'une remorque, qui comporte un corps d'essieu (2) relié rigidement à un châssis (22) de la remorque, un composant de levier (3) pouvant pivoter par rapport au corps d'essieu (2) et portant un roulement de roue (6), ainsi qu'au moins un élément de ressort (8) soutenant élastiquement le composant de levier (3) par rapport au corps d'essieu (2) et appartenant à une suspension (7), une compression du composant de levier (3) étant détectée par un capteur (23), qui se trouve dans une zone du composant de levier (3) chevauchant le corps d'essieu (2), le composant de levier (3), y compris une partie d'essieu intérieure (4), présentant une dureté comparativement très élevée par rapport aux éléments de ressort (8), de sorte que la course élastique maximale de la suspension (7) est donnée à au moins 95% par les éléments de ressort (8) et à moins de 5% par la déformation du composant de levier (3).

7. Méthode selon la revendication 6, **caractérisée en ce que** la déflexion est mesurée dans une cavité formée par le corps d'essieu (2).
